# EUROPÄISCHE PATENTANMELDUNG

(11) **EP 4 810 791 A1**
(43) Veröffentlichungstag der Anmeldung: **23.09.2026**
(21) Anmeldenummer: 25164977.8
(22) Anmeldetag: 20.03.2025
(51) Int. Cl.: F03D 1/06, F03D 13/10, F03D 80/00

(54) **VORRICHTUNG ZUR VERMEIDUNG VON INDUZIERTEN ROTORBLATTSCHWINGUNGEN EINES ROTORBLATTS EINER WINDENERGIEANLAGE UND VERFAHREN**

(71) Anmelder: Wobben Properties GmbH, 26607 Aurich (DE)
(72) Erfinder: Stemberg, Jochen, 26607 Aurich (DE); Arnold, Matthias, 26603 Aurich (DE)
(74) Vertreter: Eisenführ Speiser

(57) **Zusammenfassung**

Die Erfindung betrifft eine Vorrichtung zur Vermeidung von induzierten Rotorblattschwingungen eines Rotorblatts einer Windenergieanlage und ein Verfahren zur temporären Befestigung einer Vorrichtung zur Vermeidung von induzierten Rotorblattschwingungen an einem Rotorblatt einer Windenergieanlage. Die Vorrichtung zur Vermeidung von induzierten Rotorblattschwingungen eines Rotorblatts einer Windenergieanlage, umfasst zwei Seilabschnitte, die in einem montierten Zustand, in dem die Vorrichtung an dem Rotorblatt montiert ist, als Störkante wirkend ausgestaltet sind, wobei die zwei Seilabschnitte an mehreren voneinander beabstandeten Verbindungspunkten miteinander in Verbindung stehen und zwischen jeweils zwei benachbarten Verbindungspunkten je mindestens eines einer Vielzahl von Befestigungsmitteln an der Störkante angeordnet ist.

## Beschreibung

Die Erfindung betrifft eine Vorrichtung zur Vermeidung von induzierten Rotorblattschwingungen eines Rotorblatts einer Windenergieanlage sowie ein Verfahren zur temporären Befestigung einer Vorrichtung zur Vermeidung von induzierten Rotorblattschwingungen an einem Rotorblatt einer Windenergieanlage.

Windenergieanlagen sind bekannt. Sie umfassen neben Turm und Gondel einen Rotor mit mehreren aerodynamischen Rotorblättern. Diese generieren bei passender Windanströmung einen Auftrieb, der zu einer Rotation des Rotors führt, welche wiederum einem Generator zur Stromproduktion dient. An den verschiedenen Komponenten der Windenergieanlage, insbesondere der aerodynamisch wirksamen Rotorblätter, werden bei Windanströmung Schwingungen induziert, die zu zusätzlicher Belastung bis hin zu Schäden an Komponenten der Windenergieanlage führen. Insbesondere bei einer stillstehenden Anlage ist dies besonders problematisch. Beispielsweise wurde erkannt, dass bei einer stillstehenden Anlage und bestimmtem Anströmwinkel des Windes auf den Rotor, Schwenkschwingungen an den Rotorblättern auftreten. Bei einem normalen Betrieb der Anlage können solche Schwenkschwingungen zuverlässig durch Pitchen der Blätter und Herausdrehen des Rotors aus dem Wind (Yaw) vermieden werden. Für den Fall einer Anlage im Aufbau, bei dem weder Pitch noch Yaw zuverlässig eingesetzt werden können, da die Anlagensteuerung noch nicht aktiv ist, ist diese Lösung nicht möglich.

Es wird also nach einer Lösung gesucht, die die Blätter sicher vor aerodynamisch angeregten Schwenkschwingungen schützt, ohne dabei auf die Anlagensteuerung angewiesen zu sein.

Gemäß einem ersten Aspekt der Erfindung wird die Aufgabe durch eine Vorrichtung zur Vermeidung von induzierten Rotorblattschwingungen eines Rotorblatts einer Windenergieanlage gelöst, wobei sich das Rotorblatt von einer Rotorblattwurzel in Rotorblattlängsrichtung mit einer Rotorblattlänge zur Rotorblattspitze und von einer Rotorblattvorderkante mit einer Rotorblattprofiltiefe in Rotorblattprofiltiefenrichtung senkrecht zur Rotorblattlängsrichtung zu einer Rotorblatthinterkante erstreckt und eine Saugseite und eine Druckseite aufweist, umfassend zwei Seilabschnitte, die in einem montierten Zustand, in dem die Vorrichtung an dem Rotorblatt montiert ist, als Störkante wirkend ausgestaltet sind, eine Befestigungsanordnung umfassend eine Vielzahl von Befestigungsmitteln, wobei die Störkante in einem Bereich der Rotorblattvorderkante anbringbar ausgestaltet ist, die zwei Seilabschnitte an mehreren voneinander beabstandeten Verbindungspunkten miteinander in Verbindung stehen und zwischen jeweils zwei benachbarten Verbindungspunkten je mindestens eines der Vielzahl von Befestigungsmitteln an der Störkante angeordnet ist, wobei die Befestigungsanordnung ausgestaltet ist, die zwei Seilabschnitte in dem montierten Zustand in Rotorblattprofiltiefenrichtung aufzuspannen und die Störkante in dem Bereich der Rotorblattvorderkante zu befestigen, insbesondere temporär zu befestigen.

Die Erfindung dient zur Vermeidung von Rotorblattschwingungen insbesondere im Aufbau von Windenergieanlagen, beispielsweise bei einer Einzelblattmontage und für teilerrichtete Zustände. Besondere Bedeutung hat die Erfindung für Zustände und Zeitpunkte zu denen der Pitch und/oder Yaw-Antrieb der Anlage nicht genutzt werden können, z.B. aufgrund fehlender Energieversorgung, nicht abgeschlossener Rotorblattfestigung, sowie bei Kollisions- oder Bewegungskonflikt mit einem Installationskran oder -Ausrüstung. Insbesondere vermeidet oder ausreichend reduziert die Erfindung Schwenkschwingungen in Richtung Nasen- bzw. Hinterkante des Rotorblattes. Eine ausreichende Reduktion der Schwenkschwingungen äußert sich beispielsweise darin, dass die Anregungen kleiner als die strukturelle beziehungsweise aerodynamische Eigendämpfung des Rotorblatts sind. Ein kritisches Aufschwingen ist dann nicht mehr möglich.

Hierbei stellt die Erfindung eine insbesondere reversibel an einem Rotorblatt anbringbare Vorrichtung bereit, die gezielt eine reversible Änderung der Außengeometrie des Rotorblattes hervorruft. Diese Änderung der Außengeometrie wirkt sich derart auf die Aerodynamik des Rotorblattes aus, dass die aerodynamische Anregung von Schwenkschwingungen vermieden wird.

Eine erfindungsgemäße Vorrichtung dient zweckmäßig zur Vermeidung von induzierten Rotorblattschwingungen. Diese Rotorblattschwingungen werden dabei durch Windanströmung induziert. Ein Beispiel für Rotorblattschwingungen sind Schwenkschwingungen in Richtung Vorder- bzw. Hinterkante des Rotorblattes. Hierbei ist nicht zwingend gefordert, dass eine erfindungsgemäße Vorrichtung jegliche Schwingung unterdrückt und sich das Rotorblatt in einem komplett stillen Zustand befindet. Es genügt, dass Schwingungen reduziert werden, sodass eine positive Resonanz oder Interferenz mit weiteren Schwingungen ausbleibt, die Schwingungen mit einer Dimension hervorrufen könnte, die sich negativ auf die Belastung und/oder Sicherheit des Rotorblatts auswirken. Solche Rotorblattschwingungen werden durch eine erfindungsgemäße Vorrichtung vermieden.

Eine erfindungsgemäße Vorrichtung umfasst zwei Seilabschnitte. Diese können Teil eines Seils sein, oder aber auch zwei Teile von zwei Seilen.

Der montierte Zustand beschreibt einen Zustand, indem die Vorrichtung an dem Rotorblatt sinn- und zweckgemäß montiert ist. Montiert beschreibt dabei, dass die Vorrichtung an dem Rotorblatt angeordnet und angebracht, bevorzugt auch befestigt ist. Vorzugsweise ist diese Montage reversibel ausgestaltet derart, dass nach Auflösung der Montage das Rotorblatt einen im Wesentlichen gleichen Zustand wie vor der Montage aufweist. Im Wesentlichen gleich bedeutet dabei, dass beispielsweise von minimalen Kleberückständen bei einer Montage per Kleber, abgesehen wird. Die Montage umfasst in beispielhaften Ausführungen ein Festbinden, Festknoten oder Ankleben.

In diesem montierten Zustand sind die zwei Seilabschnitte als Störkante ausgestaltet. Eine Störkante ist dabei eine aerodynamische Störgeometrie, die die Aerodynamik des Rotorblatts stört, also beispielsweise einen laminaren Windstrom um das Rotorblatt zumindest teilweise reduziert oder verhindert. Die Störkante ist beispielsweise derart ausgestaltet, dass an der Störkante Wirbel generiert werden, die eine optimale Umströmung des Rotorblatts unterbrechen. Es wird durch die Störkante also gezielt ein Anströmungsszenario für das Rotorblatt geschaffen, das nicht dem optimalen Anströmungsszenario entspricht, für das die Form des Rotorblatts ausgelegt wurde.

Eine erfindungsgemäße Vorrichtung umfasst ferner eine Befestigungsanordnung umfassend eine Vielzahl von Befestigungsmitteln. Diese Befestigungsanordnung ist dazu ausgestaltet, in dem montierten Zustand die Montage der Vorrichtung, insbesondere der zwei Seilabschnitte, an dem Rotorblatt bereitzustellen.

Die Störkante ist in einem Bereich der Rotorblattvorderkante anbringbar ausgestaltet. Der Bereich der Rotorblattvorderkante erstreckt sich dabei von der Rotorblattvorderkante vorzugsweise maximal bis zur halben Rotorblattprofiltiefe. In diesem Bereich anbringbar ausgestaltet bedeutet, dass die Störkante Eigenschaften aufweist, die nicht verhindern, dass die Störkante in dem montierten Zustand zumindest teilweise im Bereich der Rotorblattvorderkante angebracht ist. Bevorzugt ist die gesamte Störkante im montierten Zustand in dem Bereich der Rotorblattvorderkante angebracht.

Es wurde erkannt, dass die genaue Position der Störkante im Bereich der Rotorblattvorderkante Auswirkungen auf den Effekt der Störkante auf die erzeugten Auftriebspolaren am jeweiligen Rotorblattabschnitt hat. Insbesondere hängt dies von der Position der Störkante auf Saug- und/oder Druckseite ab. Auf der Saugseite hat die Störkante einen primären Effekt auf die Polare des positiven Stallpunkts, dem Punkt, ab dem auf der Saugseite Strömungsabriss auftritt. Auf der Druckseite hat die Störkante einen primären Effekt auf die Polare des negativen Stallpunkts, dem Punkt, ab dem auf der Druckseite Strömungsabriss auftritt. Eine Position der Störkante auf der Saugseite beeinflusst hierbei insbesondere den positiven Stallbereich, und entsprechend auf der Druckseite den negativen Stallbereich.

Die zwei Seilabschnitte sind als Störkante derart angeordnet, dass sie mehrere voneinander insbesondere in einer Richtung entlang der Rotorblattvorderkante in Richtung Rotorblattspitze beabstandete Verbindungspunkte aufweisen. An diesen verbindungspunkten stehen sie zwei Seilabschnitte jeweils miteinander in Verbindung. Dies ist bereits durch eine einfache Berührung der Seilabschnitte gegeben, beispielsweise ein Aufeinanderliegen der zwei Seilabschnitte. Diese Verbindung umfasst in weiteren Ausführungsbeispielen eine Befestigung, beispielsweise durch ein Annähen oder Verknoten. Es ist ebenfalls denkbar, dass die zwei Seilabschnitte Teil einer vorgefertigten Netzstruktur sind.

Zwischen jeweils zwei benachbarten Verbindungspunkten ist je mindestens eines der Vielzahl von Befestigungsmitteln an der Störkante angeordnet. Insbesondere ist dieses mindestens eine der Vielzahl von Befestigungsmitteln an einem der zwei Seilabschnitte angeordnet. Bevorzugt ist ein Ausführungsbeispiel, in dem je ein Befestigungsmittel an der Störkante zwischen je zwei benachbarten Verbindungspunkten angeordnet ist. In diesem Ausführungsbeispiel ist ferner bevorzugt, dass je zwei benachbarte an der Störkante angeordnete Befestigungsmittel an unterschiedlichen der zwei Seilabschnitte angebracht sind.

Die Befestigungsmittel sind derart an der Störkante angeordnet, dass die Befestigungsanordnung die zwei Seilabschnitte in dem montierten Zustand in Rotorblattprofiltiefenrichtung aufspannt und die Störkante in dem Bereich der Rotorblattvorderkante insbesondere temporär befestigen. Bevorzugt spannt die Befestigungsanordnung die zwei Seilabschnitte über die Oberfläche des Rotorblatts in im Wesentlichen Rotorblattprofiltiefenrichtung auf. Im Wesentlichen Rotorblattprofiltiefenrichtung bedeutet dabei, dass durch die gewölbte Form und Dicke des Rotorblatts eine resultierende Richtung, in die die Störkante gespannt wird, von der Rotorblattprofiltiefenrichtung abweicht.

Aufspannen bedeutet dabei, dass im montierten Zustand eine Spannung auf den zwei Seilabschnitten anliegt, die zwei Seilabschnitte also nicht komplett locker, in einem entspannten Zustand, sind.

Die durch die Befestigungsanordnung im montierten Zustand hervorgerufene Befestigung der Störkante in dem Bereich der Rotorblattvorderkante impliziert, dass die Störkante ohne Auflösung der Befestigung nicht aus dem Bereich der Rotorblattvorderkante entfernt werden kann, beispielsweise durch äußere Kräfte wie Schwerkraft oder windanströmungsinduzierte Kräfte. Bevorzugt ist die Befestigung temporär und ferner bevorzugt auch reversibel ausgestaltet. Dies bedeutet, dass sich das Rotorblatt nach Entfernung der Befestigung in einem im Wesentlichen gleichen Zustand befindet, wie vor der Befestigung. Im Wesentlichen gleich bedeutet dabei, dass beispielsweise von Kleberückständen oder durch die Befestigung bewirkte Verfärbungen des Rotorblatts abgesehen wird. Der gleiche Zustand bezieht sich also vor allem auf die Aerodynamik des Rotorblatts.

Der Erfindung liegt die Erkenntnis zugrunde, dass es für die Reduzierung von Schwenkschwingungen zielführend ist, aerodynamische Profilpolaren in einem bestimmten Rotorblattschnitt, in diesem Fall im Außenbereich eines Rotorblattes (bei >50% Radius), gezielt zu verändern. Der Erfindung liegt ferner die Erkenntnis zugrunde, dass eine aerodynamische Anregung in Schwenkrichtung in einem Bereich der Profilpolaren auftritt, in dem ein mit jeweils betragsmäßig ansteigenden Anstellwinkeln negativer Auftriebsgradient vorliegt. Dieser negative Auftriebsgradient ist ausschlaggebend für die Richtung der Wirkung einer aerodynamischen Kraft. Ist der Auftriebsgradient negativ, so wirkt eine aerodynamische Kraft bei auftretenden Schwenkbewegungen immer in Bewegungsrichtung des Rotorblattes und würde die Schwenkschwingung verstärken. Ist der Auftriebsgradient in diesem Bereich hingegen positiv, würde die aerodynamische Kraft entgegen der Bewegungsrichtung des Rotorblattes wirken und eine potentielle Schwenkschwingung dämpfen. Auch ein Auftriebsgradient von Null wäre noch zielführend, da zumindest keine aerodynamische Anregung erfolgen würde, und die Schwenkbewegung des Rotorblattes durch die inhärente Strukturdämpfung abklingen würde.

Eine erfindungsgemäße Vorrichtung unterdrückt stark negative Auftriebsgradienten im Au-βenbereich der Rotorblätter. Anhang von Simulationen wurde gezeigt, dass diese Unterdrückung des stark negativen Auftriebsgradienten zu einem Ausbleiben und somit Unterdrücken von Schwenkschwingungen des Rotorblatts führt. Die Wirksamkeit der Vorrichtung wurde ebenfalls bereits auf Polarenebene im Windkanal nachgewiesen.

Gemäß einer vorteilhaften Ausgestaltung eines Aspekts der Erfindung ist die Störkante als Vielzahl nebeneinander angeordneter Rautenformen ausgestaltet. Zwischen den Rautenformen liegt dabei insbesondere je ein Verbindungspunkt der zwei Seilabschnitte. Je zwei benachbarte Verbindungspunkte sind dabei durch eine Rautenform voneinander beabstandet. Beispielsweise kreuzen zwei Seilabschnitte an den Verbindungspunkten und werden zwischen je zwei Verbindungspunkten von Befestigungsmitteln der Befestigungsanordnung zur Rautenform aufgespannt. Alternativ ist es ebenfalls möglich, dass die Störkante derart starr ausgestaltet ist, dass nicht jeder der nebeneinander angeordneten Rautenformen von einem Befestigungsmittel der Befestigungsanordnung aufgespannt wird, sondern die Form durch die Starrheit der Störkante gegeben ist.

Der von den zwei Seilabschnitten auf der Oberfläche des Rotorblatts eingegrenzte Bereich weist also im Wesentlichen die Form von mehreren nebeneinander angeordneten Rautenformen auf. Im Wesentlichen Rautenform bedeutet hierbei, dass die Rautenform in manchen Ausführungsbeispielen beispielsweise durch die Wölbung der Rotorblattoberfläche bedingte Rundungen umfasst.

Die Vielzahl nebeneinander angeordneter Rautenformen erhöht die Robustheit der Störkante. Des Weiteren ist so ein durchgehender Effekt der Störkante über einen Bereich des Rotorblatts bereitgestellt, entlang dem die Störkante angeordnet ist.

Gemäß einer bevorzugten Variante der obigen Ausgestaltung weist jede der Vielzahl nebeneinander angeordneter Rautenformen vier Ecken auf, ist jede der Vielzahl nebeneinander angeordneter Rautenformen an mindestens einer Ecke mit einer weiteren der Vielzahl nebeneinander angeordneter Rautenformen verbunden, und ist jede der Vielzahl nebeneinander angeordneter Rautenformen an maximal zwei Ecken mit einer weiteren der Vielzahl nebeneinander angeordneter Rautenformen verbunden. Eine Ecke ist dabei geometrisch zu verstehen und ist beispielsweise durch einen Knick in einem Seilabschnitt verwirklicht. Ebenso ist die Verbindung von zwei nebeneinander angeordneten Rautenformen an einer Ecke geometrisch zu verstehen, beispielsweise derart, dass keine physische Befestigung zwingend erforderlich ist, sondern eine Überlagerung der zwei Seilabschnitte an einem Verbindungspunkt genügt. In diesem Beispiel stellt der Verbindungspunkt der Seilabschnitte die Verbindung der nebeneinander angeordneten Rautenformen dar.

Jede der Vielzahl nebeneinander angeordneter Rautenformen ist an maximal zwei Ecken mit einer weiteren der Vielzahl nebeneinander angeordneter Rautenformen verbunden. Insbesondere sind die Vielzahl nebeneinander angeordneter Rautenformen entlang einer Richtung nebeneinander, also als Reihe von Rautenformen, angeordnet.

Gemäß einer weiteren bevorzugten Variante der obigen Ausgestaltung weist die Rautenformen im montierten Zustand eine Ausdehnung in Rotorblattprofiltiefenrichtung auf, die insbesondere zwischen 2 % und 20 % der Rotorblattprofiltiefe, bevorzugt etwa 10 % der Rotorblattprofiltiefe, beträgt, und eine Breite in Rotorblattlängsrichtung auf, die mehr als die doppelte Ausdehnung in Rotorblattprofiltiefenrichtung, insbesondere mehr als 4 % der Rotorblattprofiltiefe, bevorzugt etwa 20 % der Rotorblattprofiltiefe, beträgt.

Die Ausdehnung der Rautenformen in Rotorblattprofiltiefenrichtung ist insbesondere als Ausdehnung im Wesentlichen in Rotorblattprofiltiefenrichtung zu verstehen. Im Wesentlichen in Rotorblattprofiltiefenrichtung bedeutet dabei, dass die Richtung durch die Wölbung und Dicke des Rotorblatts zumindest teilweise von der Rotorblattprofiltiefenrichtung abweicht.

Die Breit in Rotorblattlängsrichtung ist insbesondere als Breite im Wesentlichen in Rotorblattlängsrichtung zu verstehen. Im Wesentlichen in Rotorblattlängsrichtung bedeutet dabei, dass die Richtung durch die Form des Rotorblatts, beispielsweise durch Krümmung, zumindest teilweise von der Rotorblattlängsrichtung abweicht.

Insbesondere für dickere Profile ist eine breitere Ausführung der Rauten vorteilhaft, so dass die Breite der Rauten bis zu 100 % der Profiltiefe betragen kann.

Gemäß einer weiteren bevorzugten Variante der obigen Ausgestaltung weist das Rotorblatt eine Rotorblattprofildicke senkrecht zur Rotorblattlängsrichtung und senkrecht zur Rotorblattprofiltiefenrichtung und die Rautenformen im montierten Zustand eine Breite in Rotorblattlängsrichtung auf, die mindestens der halben Rotorblattprofildicke entspricht. Diese Variante ist ebenfalls für dickere Rotorblattprofile vorteilhaft.

Gemäß einer weiteren vorteilhaften Ausgestaltung eines Aspekts der Erfindung, sind die Seilabschnitte an den Verbindungspunkten miteinander verknotet, verklebt und/oder aneinander befestigt. Dies erhöht die Robustheit der Störkante und begünstigt einen gleichbleibenden Effekt der Störkante, da so relative Bewegungen der Seilabschnitte zueinander verringert, bzw. an den Verbindungspunkten unterdrückt werden.

Gemäß einer weiteren vorteilhaften Ausgestaltung eines Aspekts der Erfindung, handelt es sich bei der Befestigungsanordnung um eine das Rotorblatt umspannende Befestigungsanordnung. Das Rotorblatt umspannend bedeutet hierbei, dass in dem montierten Zustand zumindest ein Teil des Rotorblatts, vorzugsweise ein überwiegender Teil des Rotorblatts zumindest lokal umspannt ist. Es ist hierbei nicht gefordert, dass das gesamte Rotorblatt umspannt ist, beispielsweise ist in beispielhaften Ausführungsformen der Bereich der Oberfläche des Rotorblatts, an dem die Störkante anliegt, nicht von der Befestigungsanordnung umspannt. Vorzugsweise ist die Befestigungsanordnung im montierten Zustand an mindestens zwei Punkten an der Störkante angebracht und umspannt zwischen diesen zwei Punkten das Rotorblatt.

In einigen Ausführungsbeispielen umfasst die Befestigungsanordnung ein Spannelement, beispielsweise eine Seilspanne, mit dem eine Spannung der Befestigungsanordnung um das Rotorblatt hervorgerufen oder verstärkt werden kann.

Gemäß einer bevorzugten Variante der obigen Ausgestaltung, ist die Befestigungsanordnung derart ausgestaltet, dass sie sich in dem montierten Zustand von mindestens einem Kontaktpunkt auf der Rotorblatthinterkante aus über die Saugseite bis hin zur Störkante erstreckt und von dem Kontaktpunkt aus über die Druckseite bis hin zur Störkante erstreckt.

Der Kontaktpunkt stellt demnach einen Widerstand dar, den die Befestigungsanordnung nutzt, um die Störkante an dem Rotorblatt zu befestigen. In anderen Worten übt das Rotorblatt an dem Kontaktpunkt eine Kraft in Rotorblattprofiltiefenrichtung auf die Befestigungsanordnung aus sowie gemäß dem *actio-reactio* Prinzip die Befestigungsanordnung an dem Kontaktpunkt eine Kraft auf das Rotorblatt. Diese Kraft nutzt die Befestigungsanordnung um die Störkante an die Oberfläche des Rotorblatts zu drücken. Durch dadurch resultierende Reibungswiderstandskräfte zwischen Störkante, Befestigungsanordnung und Oberfläche des Rotorblatts entsteht im montierten Zustand die insbesondere temporäre Befestigung.

In Ausführungsbeispielen, in denen die Störkante lediglich auf einem aus Saugseite und Druckseite angeordnet ist, erstreckt sich die Befestigungsanordnung im montierten Zustand von dem Kontaktpunkt aus über die der beiden Seiten, auf denen die Störkante nicht angeordnet ist, über die Vorderkante bis hin zur Störkante.

Gemäß einer besonders bevorzugten Variante weist das Rotorblatt eine Vielzahl an der Rotorblatthinterkante angeordneter Serrations auf, wobei die Befestigungsanordnung derart ausgestaltet ist, dass im montierten Zustand wenigstens einer der Kontaktpunkte zwischen zwei der Vielzahl von Serrations angeordnet ist.

Als Serrations werden Hinterkantenelemente verstanden, die zur aerodynamischen und/oder aeroakustischen Optimierung des Rotorblatts an der Hinterkante des Rotorblatts angeordnet sind. Serrations weisen üblicherweise eine spitz zulaufende dreieckige Form auf, es sind jedoch auch Abweichungen von dieser Form bekannt. Zwischen je zwei solcher Serrations liegt ein Zackengrund vor. In dieser besonders bevorzugten Variante liegt wenigstens einer der Kontaktpunkte insbesondere in einem solchen Zackengrund.

Dies ermöglicht die Anbringung einer erfindungsgemäßen Vorrichtung auch in Rotorblattabschnitten mit Serrations, also Zacken an der Rotorblatthinterkante, ohne, dass zusätzliche Elemente oder Änderungen der Vorrichtung nötig sind.

Zusätzlich stellen die Serrations eine zusätzliche Verankerung der Vorrichtung gegen Bewegung in Rotorblattlängsrichtung dar. Liegt ein Kontaktpunkt zwischen zwei Serrations, verhindert die Ausdehnung der Serrations in Rotorblattprofiltiefenrichtung im montierten Zustand, in dem die Befestigungsanordnung die Störkante aufspannt, eine Bewegung des Kontaktpunkts in Rotorblattlängsrichtung entlang der Rotorblatthinterkante.

Somit ist die Stabilität der erfindungsgemäßen Vorrichtung in dieser besonders bevorzugten Variante erhöht.

Gemäß einer weiteren vorteilhaften Ausgestaltung eines Aspekts der Erfindung beträgt die Dicke eines ersten Seilabschnitts der zwei Seilabschnitte und/oder eines zweiten Seilabschnitts der zwei Seilabschnitte einen Wert zwischen 1 % einer lokalen Rotorblattprofiltiefe und 2 % der lokalen Rotorblattprofiltiefe. Dies führt zu einer optimierten Wirkung der Störkante.

Es wurde also erkannt, dass der Effekt der Störkante von der Dicke der Seilabschnitte abhängt. Weiter verstärken dickere Seilabschnitte den Effekt der Störkante, sodass bei Zunahme der Profiltiefe eine Zunahme der Dicke der Seilabschnitte zur Wirkungsoptimierung der Störkante führt.

Als lokale Rotorblattprofiltiefe wird eine Rotorblattprofiltiefe an der Stelle der Störkante, beziehungsweise an einer lokalen Position auf dem Rotorblatt, verstanden. Erstreckt sich die Störkante über einen Rotorblattbereich, ist anzunehmen, dass sich auch die lokale Rotorblattprofiltiefe über diesen Rotorblattbereich ändert.

Gemäß einer weiteren vorteilhaften Ausgestaltung eines Aspekts der Erfindung weisen beide der Seilabschnitte eine gleiche Dicke auf. Dies begünstigt eine homogene Wirkung der Störkante über den Rotorblattbereich, an dem sie angeordnet ist. Insbesondere handelt es sich hierbei um eine gleiche lokale Dicke. In Ausführungsbeispielen, in denen die Dicke der Seilabschnitte im montierten Zustand in Rotorblattlängsrichtung variiert, variiert sie gleich für beide Seilabschnitte, sodass diese eine gleiche lokale Dicke aufweisen.

Gemäß einer weiteren vorteilhaften Ausgestaltung eines Aspekts der Erfindung umfasst die Befestigungsanordnung ein starres Element und ein elastisches Element, wobei insbesondere das starre Element in dem montierten Zustand auf einer von Druckseite und Saugseite angeordnet ist und das elastische Element in dem montierten Zustand auf einer von Druckseite und Saugseite angeordnet ist, auf der nicht das mindestens eine starre Element angeordnet ist.

Zur Befestigung der Störkante an dem Rotorblatt werden das starre Element und das elastische Element jeweils mit der Störkante verbunden. Zusätzlich wird das elastische Element gedehnt und eine Verbindung zwischen elastischem Element und starrem Element über die Rotorblatthinterkante hergestellt. Im montierten Zustand wirkt also eine Kraft der Dehnung des elastischen Elements entgegen, sodass die Befestigungsanordnung ausgestaltet ist eine verbesserte Aufspannung der Seilabschnitte bereitzustellen.

Das starre Element verbessert die Handhabung der Vorrichtung, da bei Anbringung der Befestigungsanordnung mit dem starren Element an der Störkante und Anordnung am Rotorblatt keine Dehnungskräfte vorliegen. Als starres Element wird ein Element verstanden, dass im montierten Zustand zumindest in Profiltiefenrichtung entlang der Oberfläche des Rotorblatts starr ausgestaltet ist. Das elastische Element ist im montierten Zustand zumindest in Profiltiefenrichtung entlang der Oberfläche des Rotorblatts elastisch ausgestaltet.

In alternativen Ausgestaltungen umfasst die Befestigungsanordnung weitere starre oder elastische Elemente, die insbesondere im montierten Zustand auf je einer der Druckseite oder Saugseite angeordnet sind. Beispielsweise stellen mehrere elastische Elemente auf Saug- und Druckseite eine verbesserte homogene Verteilung der auf das Rotorblatt wirkenden Kräfte durch die Vorrichtung bereit.

Gemäß einer bevorzugten Variante der obigen Ausgestaltung, ist das elastische Element derart dimensioniert, dass auf das elastische Element in dem montierten Zustand eine Kraft zwischen 10 N und 200 N, insbesondere zwischen 20 N und 40 N, wirkt. Diese Spannkraft stellt eine ausreichende Befestigung der Störkante bereit, sodass Bewegungen dieser möglichst verhindert werden. Zu starke Spannkräfte wirken sich möglicherweise wiederum negativ auf das Rotorblatt aus und verursachen gegebenenfalls Schäden am Rotorblatt.

Gemäß einer weiteren vorteilhaften Ausgestaltung eines Aspekts der Erfindung umfasst die Befestigungsanordnung mindestens ein Positionierungselement, das als lokale Vergrößerung der Befestigungsanordnung ausgestaltet ist, wobei das mindestens eine Positionierungselement ausgestaltet ist eine Verschiebung der Befestigungsanordnung über die Rotorblatthinterkante zu vermeiden.

Eine solche lokale Vergrößerung ist beispielsweise eine lokale Aufdickung der Befestigungsanordnung. Vorzugsweise wird hierbei ein Material verwendet, dass zusätzliche Anti-Rutsch-Eigenschaften hinsichtlich der Oberfläche des Rotorblatts aufweist, beispielsweise einen erhöhten Reibungskoeffizienten.

Das Positionierungselement ist dabei derart ausgestaltet, dass es im montierten Zustand nicht über die Rotorblatthinterkante bewegt werden kann. Somit ist eine Verschiebung der Befestigungsanordnung und der Vorrichtung im montierten Zustand in Rotorblattprofiltiefenrichtung verhindert.

Dies erhöht die Stabilität der Vorrichtung und stellt eine gleichbleibende Wirkung der Vorrichtung sicher.

Gemäß einer weiteren vorteilhaften Ausgestaltung eines Aspekts der Erfindung umfasst die Befestigungsanordnung mindestens ein Lastverteilungselement, insbesondere ein Planenelement, zur radialen Lastverteilung in Rotorblattlängsrichtung im montierten Zustand, wobei das mindestens eine Lastverteilungselement mit mindestens einem der Vielzahl von Befestigungsmitteln, insbesondere mit jedem der Vielzahl von Befestigungsmitteln, verbindbar ausgestaltet ist.

Das Lastverteilungselement ist insbesondere als Planenelement mit bevorzugt größerer Ausdehnung in Rotorblattlängsrichtung als in Rotorblattprofiltiefenrichtung im montierten Zustand ausgestaltet. Das Lastverteilungselement ist dazu ausgestaltet lokal auf die Befestigungsanordnung wirkende Lasten über einen weiteren Bereich der Befestigungsanordnung zu verteilen. Dies erhöht die Stabilität und Robustheit der Befestigungsanordnung.

Bevorzugt ist das Lastverteilungselement mit mehreren, insbesondere jedem der Vielzahl von Befestigungsmitteln verbindbar ausgestaltet, sodass auf einzelne Befestigungsmittel wirkende Lasten auf einen breiteren Bereich der Befestigungsanordnung verteilt werden.

Gemäß einer bevorzugten Variante der obigen Ausgestaltung umfasst die Befestigungsanordnung eine Vielzahl von Verbindungselementen und das mindestens eine Lastverteilungselement weist eine Breite in Rotorblattprofiltiefenrichtung auf und ist mit der Vielzahl von Verbindungselementen verbindbar ausgestaltet, wobei jedes der Vielzahl von Verbindungselementen in dem montierten Zustand jeweils mindestens einen Kontaktpunkt an der Rotorblatthinterkante und einen Abstand in Rotorblattlängsrichtung zu weiteren der Vielzahl von Verbindungselementen aufweist, wobei der Abstand mindestens 200 % einer Breite des Lastverteilungselements in Rotorblattprofiltiefenrichtung beträgt.

Die Verbindungselemente sind dabei ausgestaltet das Lastverteilungselement mit weiteren Elementen der Befestigungsanordnung oder der Störkante über die Rotorblatthinterkante zu verbinden. Das Lastverteilungselement ermöglicht dabei durch die Lastverteilung eine geringere Anzahl an Kontaktpunkten mit der Hinterkante. Die Anzahl der Kontaktpunkte kann auf einen Wert verringert werden, der bei einer gleichmäßigen Verteilung über den Rotorblattbereich, an dem die Störkante angeordnet ist, einen Kontaktpunkt alle mindestens 200 % der Breite des Lastverteilungselements in Rotorblattprofiltiefenrichtung vorsieht.

Dies ermöglicht eine einfachere Montur der Vorrichtung an dem Rotorblatt.

Gemäß einer weiteren bevorzugten Variante der obigen Ausgestaltung umfasst die Befestigungsanordnung: ein erstes Lastverteilungselement, insbesondere ein erstes Planenelement auf der Saugseite, ein zweites Lastverteilungselement, insbesondere ein zweites Planenelement auf der Druckseite, und eine Vielzahl von Verbindungselementen, wobei jedes der Vielzahl von Verbindungselementen ausgestaltet ist das erste Lastverteilungselement und das zweite Lastverteilungselement zu verbinden, wobei jedes der Vielzahl von Verbindungselementen zwischen dem ersten Lastverteilungselement und dem zweiten Lastverteilungselement mindestens einen Kontaktpunkt an der Rotorblatthinterkante aufweist.

Dies stellt eine verbesserte Lastverteilung auf die Befestigungsanordnung sowohl auf der Druckseite als auch auf der Saugseite bereit.

Gemäß einer besonders bevorzugten Variante der obigen Varianten der obigen Ausgestaltung weist das Rotorblatt eine Vielzahl an der Rotorblatthinterkante angeordneter Serrations auf, wobei jedes der Vielzahl von Verbindungselementen derart ausgestaltet ist, dass im montierten Zustand der mindestens eine Kontaktpunkt zwischen zwei der Vielzahl von Serrations angeordnet ist.

Dies stellt eine verbesserte Befestigung durch die Befestigungsanordnung dar, da eine Bewegung der Verbindungselemente entlang der Rotorblatthinterkante durch die Ausdehnung der Serrations in Rotorblattprofilrichtung verhindert wird.

Gemäß einer weiteren besonders bevorzugten Variante der obigen Varianten der obigen Ausgestaltung umfasst mindestens eines der Vielzahl von Verbindungselementen ein erstes Positionierungselement und ein zweites Positionierungselement, derart, dass im montierten Zustand das erste Positionierungselement auf der Saugseite angeordnet ist und das zweite Positionierungselement auf der Druckseite angeordnet ist, wobei das erste Positionierungselement und das zweite Positionierungselement als lokale Vergrößerungen des mindestens einen Verbindungselements ausgestaltet sind, und das das erste Positionierungselement und das zweite Positionierungselement ausgestaltet sind eine Verschiebung des mindestens einen Verbindungselements über die Rotorblatthinterkante zu vermeiden.

Eine solche lokale Vergrößerung ist beispielsweise eine lokale Aufdickung des Verbindungselements. Vorzugsweise wird hierbei ein Material verwendet, dass zusätzliche Anti-Rutsch-Eigenschaften hinsichtlich der Oberfläche des Rotorblatts aufweist, beispielsweise einen erhöhten Reibungskoeffizienten.

Das Positionierungselement ist dabei derart ausgestaltet, dass es im montierten Zustand nicht über die Rotorblatthinterkante bewegt werden kann. Somit ist eine Verschiebung der Verbindungselemente, des Lastverteilungselements und der Vorrichtung im montierten Zustand in Rotorblattprofiltiefenrichtung verhindert.

Dies erhöht die Stabilität der Vorrichtung und stellt eine gleichbleibende Wirkung der Vorrichtung sicher.

Gemäß einer weiteren vorteilhaften Ausgestaltung eines Aspekts der Erfindung ist jedes der Vielzahl von Befestigungsmitteln im montierten Zustand individuell lösbar ausgestaltet, umfassend mindestens ein Lösungselement ausgestaltet zur individuellen Lösung jedes der Vielzahl von Befestigungsmitteln wobei das Lösungselement derart ausgestaltet ist, dass die individuelle Lösung jedes der Vielzahl von Befestigungsmitteln aus einer Distanz zu der Vielzahl von Befestigungsmitteln durchführbar ist, wobei die Distanz mindestens der Rotorblattlänge entspricht.

Vorzugsweise umfasst die Vorrichtung ein Lösungselement, dass zur individuellen Lösung jedes der Vielzahl von Befestigungsmitteln ausgestaltet ist. Alternativ umfasst die Vorrichtung mehrere Lösungselemente, wobei jedes zur individuellen Lösung eines oder mehrerer der Vielzahl von Befestigungsmitteln ausgestaltet ist.

Ein Zustand, indem jedes der Vielzahl von Befestigungsmitteln gelöst ist, ist kein montierter Zustand. Ein Zustand, indem jedes der Vielzahl von Befestigungsmitteln nicht gelöst ist, jedoch lösbar ausgestaltet ist, ist ein montierter Zustand. Die Lösbarkeit der Befestigungsmittel stellt eine Möglichkeit zur Entfernung der Vorrichtung von dem Rotorblatt dar, sodass eine temporäre, insbesondere reversible Befestigung der Vorrichtung an dem Rotorblatt bereitgestellt ist.

Vorzugsweise beinhaltet die Lösung der Befestigungsmittel nicht die Zerstörung oder Beschädigung dieser. Die Lösung ist dabei aus einer Distanz möglich, die mindestens der Blattlänge entspricht. Beispielsweise kann die Lösung durch Ziehen an einem langen Seil oder Senden eines Befehls über eine drahtlose Verbindung an einen Empfänger geschehen. Das Lösungselement ist beispielsweise als Schnur, Seil, Karabiner oder Klemme ausgestaltet.

Beispiele für Lösungselemente sind in Befestigungsmittel eingebrachte "Slip"-Knoten, Fernauslösbare Karabiner, herausziehbare Steck- oder Sperrelemente (z.B. Querstift aus Metall oder Leine als durchgehende "Key-Line") oder eine mikroverzahne Geometrie (z.B. Reißverschluss).

Dies ermöglicht eine einfachere Auflösung des montierten Zustands und Entfernung der Vorrichtung von dem Rotorblatt.

Gemäß einer weiteren vorteilhaften Ausgestaltung eines Aspekts der Erfindung umfasst die Vorrichtung mindestens ein Schutzelement ausgestaltet zur Umschließung wenigstens eines Teils der Befestigungsanordnung. Vorzugsweise derart, dass im montierten Zustand für den umschlossenen Teil der Befestigungsanordnung ein erhöhter Schutz besteht, beispielsweise gegen Witterungseinflüsse.

Gemäß einer bevorzugten Variante der obigen Ausgestaltung ist das mindestens eine Schutzelement als ein oder mehrere Klappen oder ein oder mehrere Laschen ausgestaltet und umfasst einen Verschluss, insbesondere ein oder mehrere Klettbänder oder ein oder mehrere Druckknöpfe.

Die ein oder mehreren Klappen oder ein oder mehreren Laschen sind dabei derart ausgestaltet, dass sie um den Teil der Befestigungsanordnung im montierten Zustand gelegt sind und diesen Teil somit umschließen. Der Verschluss stellt sicher, dass dieses Umschließen nicht durch äußere Einwirkungen gelöst wird und der Schutz des Schutzelements weiter besteht.

Gemäß eines zweiten Aspekts der Erfindung wird die Aufgabe durch ein Verfahren zur temporären Befestigung einer Vorrichtung zur Vermeidung von induzierten Rotorblattschwingungen an einem Rotorblatt einer Windenergieanlage gelöst, wobei sich das Rotorblatt von einer Rotorblattwurzel in Rotorblattlängsrichtung mit einer Rotorblattlänge zur Rotorblattspitze und von einer Rotorblattvorderkante mit einer Rotorblattprofiltiefe in Rotorblattprofiltiefenrichtung senkrecht zur Rotorblattlängsrichtung zu einer Rotorblatthinterkante erstreckt und eine Saugseite und eine Druckseite aufweist, wobei die Vorrichtung umfasst zwei Seilabschnitte, die in einem montierten Zustand, in dem die Vorrichtung an dem Rotorblatt montiert ist, als Störkante wirkend ausgestaltet sind, eine Befestigungsanordnung umfassend eine Vielzahl von Verbindungselementen, wobei das Rotorblatt eine Vielzahl von an der Rotorblatthinterkante angeordneten Serrations aufweist, die Störkante in einem Bereich der Rotorblattvorderkante an dem Rotorblatt anbringbar ausgestaltet ist, die Befestigungsanordnung an der Störkante anbringbar ausgestaltet ist, umfassend die folgenden Schritte: Anordnen der Störkante an dem Rotorblatt; Anbringen der Befestigungsanordnung an der Störkante auf einer der Saugseite oder der Druckseite; Führen der Vielzahl von Verbindungselementen von der einen der Saugseite oder der Druckseite auf eine andere der Saugseite oder der Druckseite über die Rotorblatthinterkante derart, dass jedes der Vielzahl von Verbindungselementen zwischen zwei der Vielzahl von Serrations verläuft; Befestigen der Vorrichtung an dem Rotorblatt durch Anbringen der Befestigungsanordnung auf der anderen der Saugseite oder der Druckseite an der Störkante.

Der Schritt des Anordnens der Störkante an dem Rotorblatt umfasst beispielsweise ein in Berührung bringen und/oder Anlegen.

Der Schritt des Anbringens der Befestigungsanordnung an der Störkante auf einer der Saugseite oder der Druckseite umfasst beispielsweise ein Verbinden der Befestigungsanordnung mit der Störkante und/oder Befestigen der Befestigungsanordnung an der Störkante.

Nach dem Schritt des Führens führt die Vorrichtung um das Rotorblatt.

Der Schritt des Anbringens der Befestigungsanordnung auf der anderen Seite stellt den montierten Zustand her, indem die Seilabschnitte von der Befestigungsanordnung um das Rotorblatt aufgespannt werden. Hierdurch entsteht die Befestigung der Vorrichtung an dem Rotorblatt.

Das erfindungsgemäße Verfahren stellt eine einfache Methode zur temporären und robusten Befestigung einer Vorrichtung zur Vermeidung von induzierten Rotorblattschwingungen an einem Rotorblatt einer Windenergieanlage dar.

Erfindungsgemäß ist es möglich jede der beschriebenen Ausgestaltungen und Varianten der Vorrichtung gemäß dem ersten Aspekt sowie auch weitere, nicht beschriebene Ausgestaltungen und Varianten einer erfindungsgemäßen Vorrichtung, mit einem erfindungsgemäßen Verfahren temporär an einem Rotorblatt einer Windenergieanlage zu befestigen.

In Ausführungsbeispielen umfasst ein erfindungsgemäßes Verfahren zusätzliche Schritte, vor, zwischen, und/oder nach den explizit oben aufgeführten Verfahrensschritten.

Merkmale vorteilhafter Ausführungsformen der Erfindung sind insbesondere in den Unteransprüchen definiert, wobei weitere vorteilhafte Merkmale, Ausführungen und Ausgestaltungen für den Fachmann zudem aus der obigen Erläuterung und der folgenden Diskussion zu entnehmen sind.

Im Folgenden wird die vorliegende Erfindung anhand von in den Figuren dargestellten Ausführungsbeispielen weiter illustriert und erläutert. Hierbei zeigt
- Fig. 1: eine schematische Darstellung einer Windenergieanlage,
- Fig. 2: eine schematische Darstellung eines Windparks,
- Fig. 3: eine schematische Darstellung eines Auftriebspolaren-Diagramms eines Rotorblatts,
- Fig. 4: eine schematische Darstellung zur Illustration eines ersten Ausführungsbeispiels der Störkante,
- Fig. 5: eine schematische Darstellung zur Illustration des ersten Ausführungsbeispiels der Störkante,
- Fig. 6: eine schematische Darstellung zur Illustration eines ersten Ausführungsbeispiels der erfindungsgemäßen Vorrichtung,
- Fig. 7: eine schematische Darstellung zur Illustration eines zweiten Ausführungsbeispiels der erfindungsgemäßen Vorrichtung,
- Fig. 8: eine schematische Darstellung zur Illustration eines Teils eines dritten Ausführungsbeispiels der erfindungsgemäßen Vorrichtung,
- Fig. 9: ein schematisches Ablaufdiagramm eines Ausführungsbeispiels des erfindungsgemäßen Verfahrens.

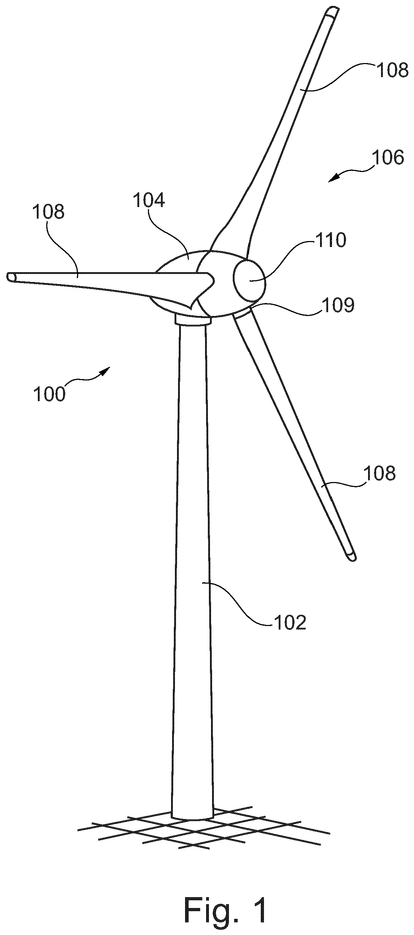

Figur 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.

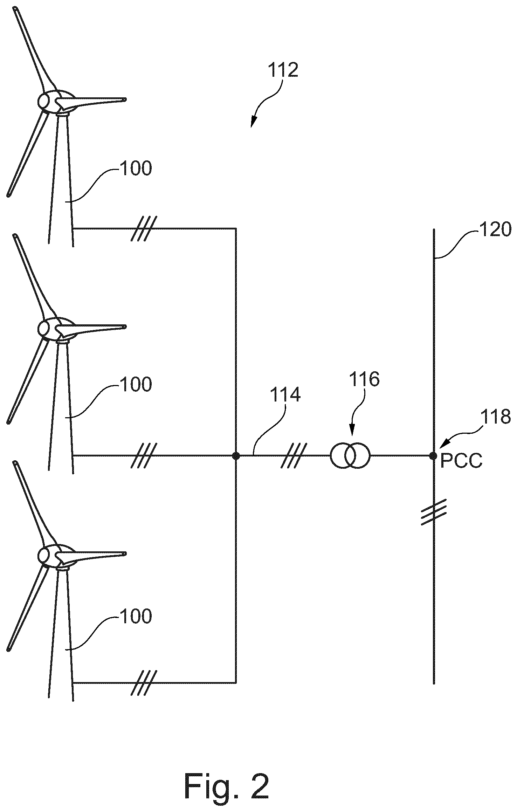

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112. Es kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

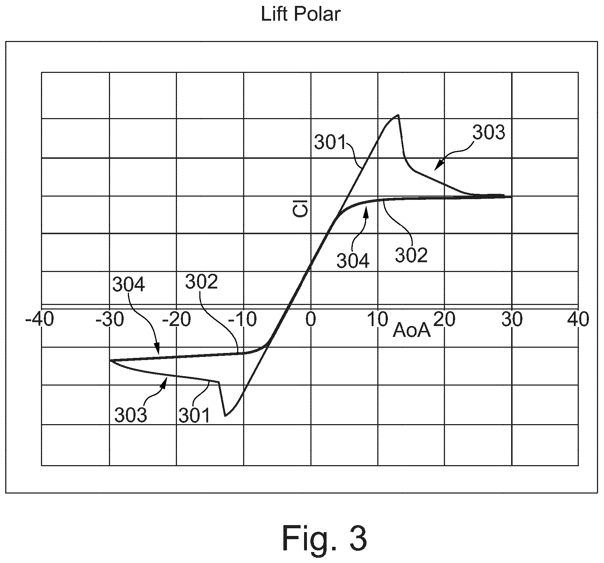

Figur 3 zeigt eine schematische Darstellung eines Auftriebspolaren-Diagramms eines Rotorblatts, genauer eines Rotorblattsegments eines äußeren Bereichs des Rotorblatts (>50% Rotorblattradius). Gezeigt sind zwei Kurven, eine Auftriebspolare ohne Modifikation 301 und eine Auftriebspolare mit Modifikation 302, aufgetragen über verschiedene Anstellwinkel. Bei der Modifikation handelt es sich um eine Modifikation des Rotorblatts durch Anbringen einer erfindungsgemäßen Vorrichtung. Beide Kurven 301, 302 zeigen die größte aerodynamische Anregung bei Anstellwinkeln zwischen +20° und +40° und zwischen -20° und -40°. Die Profilpolaren der Auftriebspolare ohne Modifikation 301 weisen in diesem Anstellwinkelbereich einen stark negativen Auftriebsgradienten 303 auf. Dieser führt zu Anregungen des Rotorblatts, die beispielsweise Schwenkschwingungen induzieren.

Es wurde nun erkannt, dass durch Anbringen einer erfindungsgemäßen Vorrichtung am Rotorblatt diese stark negativen Auftriebsgradienten 303 eliminiert werden, sodass in der Auftriebspolaren mit Modifikation 302 in besagten Anstellwinkelbereichen ein positiver Auftriebsgradient 304 vorliegt, der das Rotorblatt nicht derart negativ anregt, dass Schwenkschwingungen auftreten. Insbesondere treten nach Eintreten des Strömungsabrisses keine negativen Auftriebsgradienten auf. Der Strömungsabriss findet außerdem deutlich sanfter und früher statt und zeichnet sich dadurch ab, dass der Auftriebsgradient extrem reduziert ist, am Ende des sog. "linearen Astes" der Polare. Der Auftrieb steigt ab Eintreten des Strömungsabrisses mit dem Anstellwinkel also nicht mehr linear an.

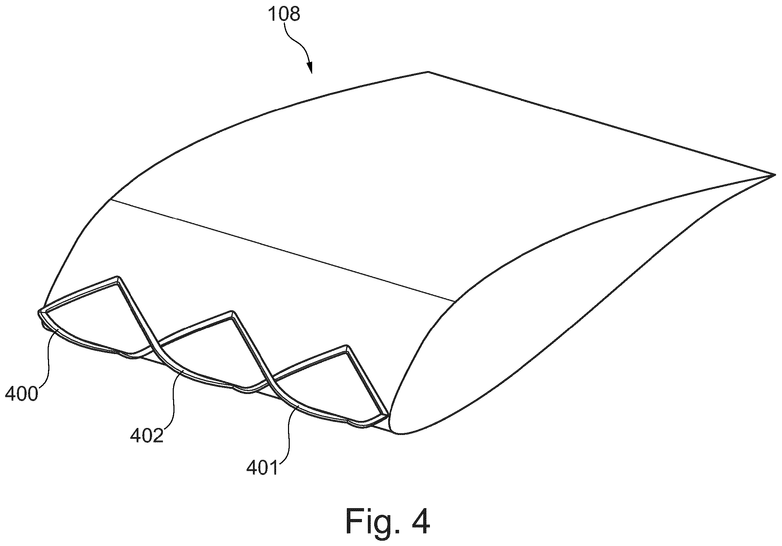

Figur 4 zeigt eine schematische Darstellung zur Illustration eines ersten Ausführungsbeispiels der Störkante 400, angeordnet an einem Rotorblattsegment eines Rotorblatts 108. Die Störkante 400 ist zur Erreichung der Polarenmodifikation aus Figur 3 im Bereich der Vorderkante des Rotorblatts angeordnet. Die Störkante 400 kann dabei aus Seilen oder ähnlichen flexiblen oder steifen Strukturen bestehen, beziehungsweise diese umfassen. In diesem Ausführungsbeispiel umfasst die Störkante einen ersten Seilabschnitt 401 und einen zweiten Seilabschnitt 402, die in einem Zick-Zack-Muster derart übereinander angeordnet sind, dass eine Rautenform der Störkante 400 entsteht. Diese Form stellt eine robuste Anbringungsmöglichkeit am Rotorblatt sowie einen größeren Wirkbereich hinsichtlich der beeinflussten Anstellwinkelbereiche im Vergleich zu vorbekannten Lösungen bereit. Die Seilabschnitte 401, 402 überkreuzen sich an mehreren Verbindungspunkten 403. In diesem Ausführungsbeispiel kommen die Verbindungspunkte 403 lediglich durch ein Übereinanderlegen zustande. In alternativen Ausführungsbeispielen sind die zwei Seilabschnitte 401, 402 an den Verbindungspunkten 403 verklebt, vernäht und/oder ineinander verwoben.

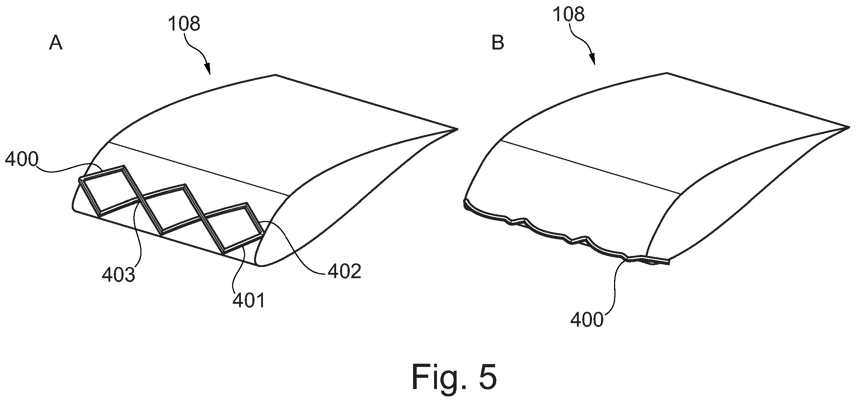

Die Rautenstruktur der Störkante 400 kann dabei entsprechend der Profilwölbung in Richtung Saug- oder Druckseite verschoben werden, um die Beeinflussung der Störkante 400 auf die Polare auf den negativen oder positiven Stallpunkt zu konzentrieren, wie in Figur 5 gezeigt. Eine Verschiebung auf die Saugseite beeinflusst hierbei insbesondere den positiven Stallbereich, und entsprechend auf die Druckseite den negativen Stallbereich. Stall ist dabei als Synonym zu Strömungsabriss zu verstehen.

In Abbildung A der Figur 5 ist die Störkante 400 auf der Saugseite des Rotorblatts 108 im Bereich der Vorderkante angeordnet. In Abbildung B der Figur 5 ist die Störkante 400 auf der Druckseite des Rotorblatts 108 im Bereich der Vorderkante angeordnet. Je nach Rotorblatt und zu vermeidender Schwingung wird eine optimale Position der Störkante 400 auf Druck- und/oder Saugseite des Rotorblatts gewählt. Diese optimale Position lässt sich beispielsweise anhand eines Auftriebspolaren-Diagramms des Rotorblattabschnitts, an dem die Störkante angebracht werden soll, ermitteln.

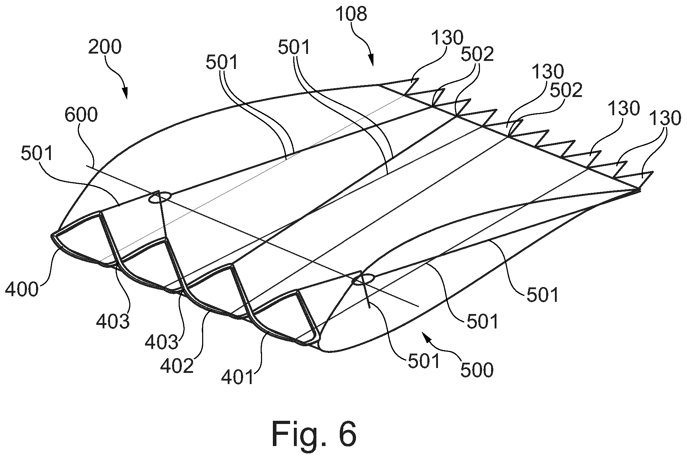

Figur 6 zeigt eine schematische Darstellung zur Illustration eines ersten Ausführungsbeispiels der erfindungsgemäßen Vorrichtung 200. Die Störkante 400 ist in einem Bereich der Vorderkante des Rotorblatts 108 angeordnet. Die Befestigungsanordnung 500 umfasst mehrere Befestigungsmittel 501, die die Störkante 400 über Kontaktpunkte 502 an der Rotorblatthinterkante zwischen je zwei mehrerer Serrations 130 in Position halten und befestigen. Die Befestigungsmittel 501 sind in diesem Ausführungsbeispiel zweiteilig ausgestaltet, derart, dass die zwei Teile eines Befestigungsmittel 501 durch ein Lösungselement 600 zusammengehalten werden. Das Lösungselement 600 ist in diesem Ausführungsbeispiel als Seil ausgestaltet, derart, dass beim Entfernen des Lösungselements die Befestigungsmittel 501 individuell gelöst werden.

Figur 6 zeigt die erfindungsgemäße Vorrichtung 200 gemäß dem ersten Ausführungsbeispiel im montierten Zustand. Durch Entfernen des Lösungselements 600 kann dieser montierte Zustand gelöst werden. Es liegt demnach eine reversible und temporäre Befestigung der Vorrichtung 200 vor. In diesem montierten Zustand sind die Befestigungsmittel 501 von einem Verbindungspunkt mit der Störkante auf Druck- bzw. Saugseite über die Oberfläche des Rotorblatts 108 bis hin zur Rotorblatthinterkante geführt und dort um je eine Serration 130 geführt sowie anschließend über die selbe der Druck- bzw. Saugseite zu einem zweiten Verbindungspunkt mit der Störkante zurück. Durch die Ausdehnung der Serrations 130 in Rotorblattprofiltiefenrichtung sowie vorliegender Spannung auf jedem der Befestigungsmittel 501 besteht eine Befestigung der Vorrichtung 200 an dem Rotorblatt 108. Die Serrations 130 verhindern durch ihre Ausdehnung in Rotorblattprofiltiefenrichtung eine radiale Bewegung der Befestigungsmittel 501.

Die Störkante 400 umfasst in diesem Ausführungsbeispiel zwei Seilabschnitte 401,402, die an mehreren Verbindungspunkten 403 in Verbindung stehen. Zwischen je zwei dieser Verbindungspunkte 403 ist je ein Befestigungsmittel 501 auf der Druck- und auf der Saugseite an der Störkante 400 angeordnet, sodass diese über die Oberfläche des Rotorblatts 108 in Richtung Rotorblatthinterkante aufgespannt wird.

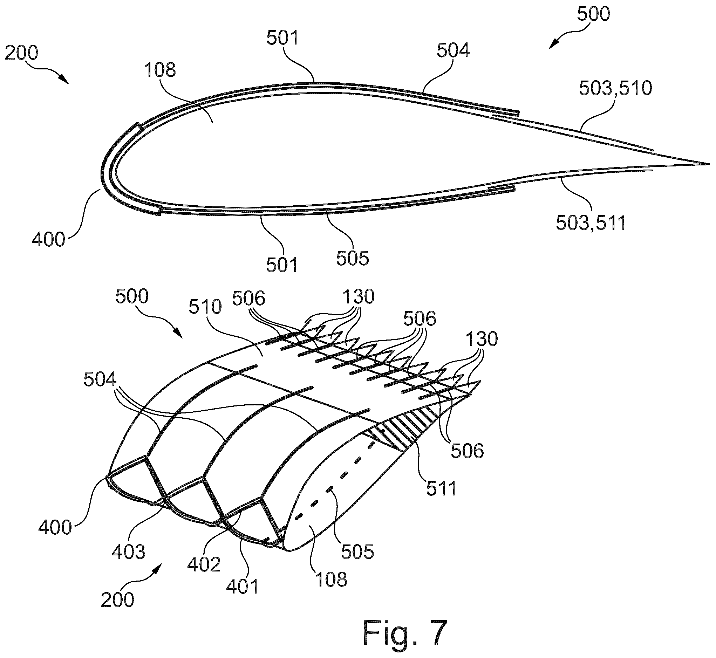

Figur 7 zeigt eine schematische Darstellung zur Illustration eines zweiten Ausführungsbeispiels der erfindungsgemäßen Vorrichtung 200. Die Vorrichtung 200 umfasst in diesem Ausführungsbeispiel eine Störkante 400 und eine Befestigungsanordnung 500 umfassend mehrere Befestigungsmittel 501 sowie zwei Lastverteilungselemente 503 in Form von Planen, davon ein erstes Lastverteilungselement 510 angeordnet auf der Saugseite des Rotorblatts 108 und ein zweites Lastverteilungselement 511 angeordnet auf der Druckseite des Rotorblatts 108. Die Befestigungsmittel 501 umfassen in diesem Ausführungsbeispiel starre Elemente 504 und elastische Elemente 505. Die Befestigungsanordnung 500 umfasst außerdem mehrere Verbindungselemente 506.

Die Störkante 400 ist in einem Bereich der Vorderkante eines Rotorblattabschnitts des Rotorblatts 108 angeordnet. An der Störkante 400 sind auf der Saugseite mehrere starre Elemente 504 angebracht. Diese sind wiederum mit dem ersten Lastverteilungselemente 510 verbunden. Die Lastverteilungselemente 503 sind in einem Bereich der Rotorblatthinterkante auf Druck- bzw. Saugseite des Rotorblatts 108 angeordnet. Beide Lastverteilungselemente 510, 511 sind jeweils mit den mehreren Verbindungselementen 506 verbunden. Diese verbinden die zwei Lastverteilungselemente 510, 511 über die Rotorblatthinterkante. An der Rotorblatthinterkante verläuft jedes der Verbindungselemente 506 zwischen zwei von mehreren Serrations 130. Auf der Druckseite ist das zweite Lastverteilungselement 511 mit mehreren elastischen Elementen 505 verbunden. Zur Wahrung der Übersichtlichkeit ist in Figur 7 lediglich eines dieser elastischen Elemente 505 gezeigt. Die weiteren elastischen Elemente 505 verlaufen parallel zu dem gezeigten elastischen Element 505 und verbinden die Störkante 400 mit dem zweiten Lastverteilungselement 511. Die elastischen Elemente 505 verbinden das zweite Lastverteilungselement 511 mit der Störkante 400. Erfindungsgemäß ist die Elastizität der elastischen Elemente 505 derart ausgestaltet, dass diese zur Verbindung des zweiten Lastverteilungselements 511 und der Störkante 400, also zur Herstellung des montierten Zustands, gedehnt werden. Durch diese Dehnung im montierten Zustand wirkt eine Kraft entlang der Befestigungsanordnung 500, die zur Befestigung der Vorrichtung 200 an dem Rotorblatt 108 beiträgt.

Die Elastik der elastischen Elemente 505 verbessert dabei die Passform der Vorrichtung 200 auf das Rotorblatt 108 durch die resultierende Vorspannung, während durch die starren Elemente 504 die Ausrichtung der Störkante 400 auf dem Rotorblatt 108 sichergestellt wird. In alternativen Ausführungsbeispielen sind auch Kombinationen der starren und elastischen Elemente über Saug- und Druckseite vorhanden.

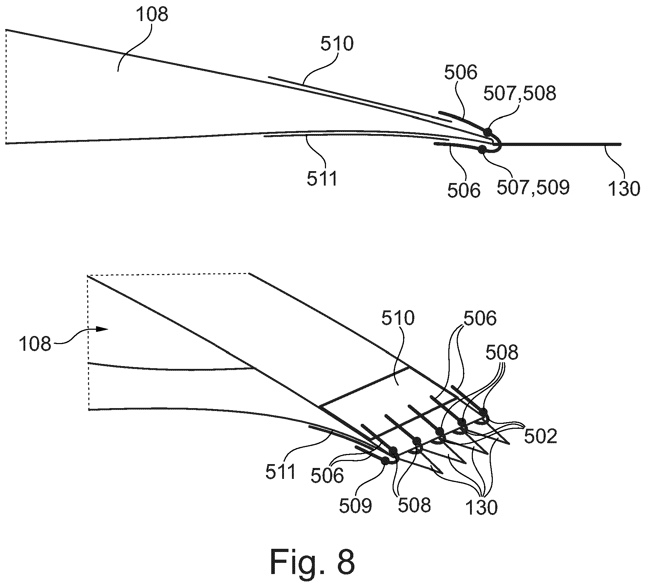

Figur 8 zeigt eine schematische Darstellung zur Illustration eines Teils eines dritten Ausführungsbeispiels der erfindungsgemäßen Vorrichtung 200. In Figur 8 ist lediglich ein Ausschnitt des Bereichs der Rotorblatthinterkante gezeigt. In diesem Ausführungsbeispiel ist jedoch ebenfalls eine erfindungsgemäße Vorrichtung 200 im montierten Zustand an dem Rotorblatt 108 angebracht. Der Fokus der Figur 8 liegt allerdings nicht auf der Störkante 400, sondern auf den Lastverteilungselementen 503, umfassend ein erstes Lastverteilungselement 510 und ein zweites Lastverteilungselement 511 und insbesondere deren Verbindung per Verbindungselemente 506 über die Rotorblatthinterkante, weswegen ausschließlich diese gezeigt sind. Die Befestigungsanordnung 500 umfasst in diesem Ausführungsbeispiel zwei Lastverteilungselemente 510, 511 in Form von Planen, das erste Lastverteilungselement 510 auf der Saugseite, das zweite Lastverteilungselement 511 auf der Druckseite des Rotorblatts 108 angeordnet. Die zwei Lastverteilungselemente 510, 511 sind über mehrere Verbindungselemente 506 über die Rotorblatthinterkante miteinander verbunden. Jedes der mehreren Verbindungselemente 506 verläuft dabei zwischen je zwei mehrerer Serrations 130, die an der Hinterkante des Rotorblatts 108 angebracht sind. Dabei weist jede der mehreren Verbindungselemente 506 einen Kontaktpunkt 502 mit der Rotorblatthinterkante zwischen je zwei der Serrations 130 auf.

Zusätzlich weist jedes der mehreren Verbindungselemente 506 je eine lokale Vergrößerung 507 auf Druck- und Saugseite in Form von Positionierungsknoten auf. Hierbei umfasst jedes der mehreren Verbindungselemente ein erstes Positionierungselement 508 in Form einer lokalen Vergrößerung in Form eines Knotens auf der Saugseite und ein zweites Positionierungselement 509 in Form einer lokalen Vergrößerung in Form eines Knotens auf der Druckseite des Rotorblatts 108 auf. Diese lokalen Vergrößerungen verhindern eine Bewegung der Verbindungselemente 506 über die Rotorblatthinterkante. Dies sorgt für eine verbesserte Stabilität der Befestigungsanordnung 500.

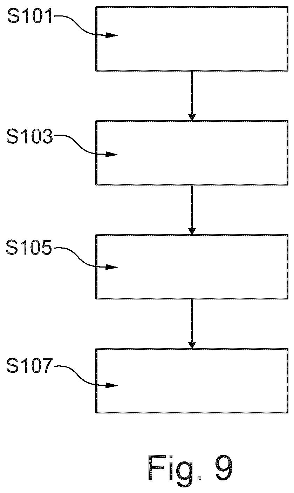

Figur 9 zeigt ein schematisches Ablaufdiagramm eines Ausführungsbeispiels des erfindungsgemäßen Verfahrens zur temporären Befestigung einer Vorrichtung zur Vermeidung von induzierten Rotorblattschwingungen an einem Rotorblatt einer Windenergieanlage.

Der Schritt S101 umfasst ein Anordnen der Störkante an dem Rotorblatt. Beispielsweise wird die Störkante an einem Aufstellort einer Windenergieanlage auf ein Rotorblatt gelegt, dass noch nicht an der Windenenergieanlage montiert ist.

Der Schritt S103 umfasst ein Anbringen der Befestigungsanordnung an der Störkante auf einer der Saugseite oder der Druckseite. Beispielsweise wird die Störkante durch Anbringen der Befestigungsanordnung zusätzlich in ihrer Position und/oder Form optimiert. Die Befestigungsanordnung dient nach Anbringung als Mittel um eine Position und/oder Form der Störkante durch Zug an der Befestigungsanordnung anzupassen.

Der Schritt S105 umfasst ein Führen der Vielzahl von Verbindungselementen von der einen der Saugseite oder der Druckseite auf eine andere der Saugseite oder der Druckseite über die Rotorblatthinterkante derart, dass jedes der Vielzahl von Verbindungselementen zwischen zwei der Vielzahl von Serrations verläuft.

Der Schritt S107 umfasst ein Befestigen der Vorrichtung an dem Rotorblatt durch Anbringen der Befestigungsanordnung auf der anderen der Saugseite oder der Druckseite an der Störkante. In diesem Schritt S107 ist beispielsweise auch ein Festzurren der Befestigungsanordnung oder Dehnen von zumindest Teilen der Befestigungsanordnung umfasst.

### Bezugszeichen:

- 100: Windenergieanlage
- 102: Turm
- 104: Gondel
- 106: Rotor
- 108: Rotorblatt
- 109: Rotorblattwurzel
- 110: Spinner
- 112: Windpark
- 114: Parknetz
- 116: Transformator
- 118: Einspeisepunkt
- 120: Versorgungsnetz
- 130: Serration
- 200: Vorrichtung
- 301: Auftriebspolare ohne Modifikation
- 302: Auftriebspolare mit Modifikation
- 303: Stark negativer Auftriebsgradient
- 304: Positiver Auftriebsgradient
- 400: Störkante
- 401: Erster Seilabschnitt
- 402: Zweiter Seilabschnitt
- 403: Verbindungspunkt
- 500: Befestigungsanordnung
- 501: Befestigungsmittel
- 502: Kontaktpunkt
- 503: Lastverteilungselement
- 504: Starres Element
- 505: Elastisches Element
- 506: Verbindungselement
- 507: Lokale Vergrößerung des Verbindungselements
- 508: erstes Positionierungselement
- 509: zweites Positionierungselement
- 510: erstes Lastverteilungselement
- 511: zweites Lastverteilungselement
- 600: Lösungselement

## Patentansprüche

1. Vorrichtung (200) zur Vermeidung von induzierten Rotorblattschwingungen eines Rotorblatts (108) einer Windenergieanlage (100), wobei sich das Rotorblatt (108) von einer Rotorblattwurzel (109) in Rotorblattlängsrichtung mit einer Rotorblattlänge zur Rotorblattspitze und von einer Rotorblattvorderkante mit einer Rotorblattprofiltiefe in Rotorblattprofiltiefenrichtung senkrecht zur Rotorblattlängsrichtung zu einer Rotorblatthinterkante erstreckt und eine Saugseite und eine Druckseite aufweist, umfassend
zwei Seilabschnitte (401, 402), die in einem montierten Zustand, in dem die Vorrichtung (200) an dem Rotorblatt (108) montiert ist, als Störkante (400) wirkend ausgestaltet sind,
eine Befestigungsanordnung (500) umfassend eine Vielzahl von Befestigungsmitteln (501),
wobei
die Störkante (400) in einem Bereich der Rotorblattvorderkante anbringbar ausgestaltet ist,
die zwei Seilabschnitte (401, 402) an mehreren voneinander beabstandeten Verbindungspunkten (403) miteinander in Verbindung stehen und zwischen jeweils zwei benachbarten Verbindungspunkten (403) je mindestens eines der Vielzahl von Befestigungsmitteln (501) an der Störkante (400) angeordnet ist, wobei die Befestigungsanordnung (500) ausgestaltet ist, die zwei Seilabschnitte (401, 402) in dem montierten Zustand in Rotorblattprofiltiefenrichtung aufzuspannen und die Störkante (400) in dem Bereich der Rotorblattvorderkante zu befestigen, insbesondere temporär zu befestigen.

2. Vorrichtung (200) nach Anspruch 1, wobei die Störkante (400) als eine Vielzahl nebeneinander angeordneter Rautenformen ausgestaltet ist, wobei vorzugsweise
jede der Vielzahl nebeneinander angeordneter Rautenformen vier Ecken aufweist,
jede der Vielzahl nebeneinander angeordneter Rautenformen an mindestens einer Ecke mit einer weiteren der Vielzahl nebeneinander angeordneter Rautenformen verbunden ist, und
jede der Vielzahl nebeneinander angeordneter Rautenformen an maximal zwei Ecken mit einer weiteren der Vielzahl nebeneinander angeordneter Rautenformen verbunden ist.

3. Vorrichtung (200) nach Anspruch 2,
wobei die Rautenformen im montierten Zustand
eine Ausdehnung in Rotorblattprofiltiefenrichtung aufweisen, die insbesondere zwischen 2 % und 20 % der Rotorblattprofiltiefe, bevorzugt etwa 10 % der Rotorblattprofiltiefe, beträgt, und
eine Breite in Rotorblattlängsrichtung aufweisen, die mehr als die doppelte Ausdehnung in Rotorblattprofiltiefenrichtung, insbesondere mehr als 4 % der Rotorblattprofiltiefe, bevorzugt etwa 20 % der Rotorblattprofiltiefe, beträgt,
oder
wobei das Rotorblatt (108) eine Rotorblattprofildicke senkrecht zur Rotorblattlängsrichtung und senkrecht zur Rotorblattprofiltiefenrichtung aufweist und die Rautenformen im montierten Zustand eine Breite in Rotorblattlängsrichtung aufweisen, die mindestens der halben Rotorblattprofildicke entspricht.

4. Vorrichtung (200) nach einem der vorstehenden Ansprüche, wobei die Seilabschnitte (401, 402) an den Verbindungspunkten (403) miteinander verknotet, verklebt und/oder aneinander befestigt sind.

5. Vorrichtung (200) nach einem der vorstehenden Ansprüche, wobei es sich bei der Befestigungsanordnung (500) um eine das Rotorblatt (108) umspannende Befestigungsanordnung (500) handelt.

6. Vorrichtung (200) nach Anspruch 5,
wobei die Befestigungsanordnung (500) derart ausgestaltet ist, dass sie sich in dem montierten Zustand von mindestens einem Kontaktpunkt (502) auf der Rotorblatthinterkante aus über die Saugseite bis hin zur Störkante (400) erstreckt und von dem Kontaktpunkt (502) aus über die Druckseite bis hin zur Störkante (400) erstreckt,
wobei das Rotorblatt (108) insbesondere eine Vielzahl an der Rotorblatthinterkante angeordneter Serrations (130) aufweist und die Befestigungsanordnung (500) derart ausgestaltet ist, dass im montierten Zustand wenigstens einer der Kontaktpunkte (502) zwischen zwei der Vielzahl von Serrations (130) angeordnet ist.

7. Vorrichtung (200) nach einem der vorstehenden Ansprüche,
wobei die Dicke eines ersten Seilabschnitts (401) der zwei Seilabschnitte (401, 402) und/oder eines zweiten Seilabschnitts (402) der zwei Seilabschnitte (401, 402) einen Wert zwischen 1 % einer lokalen Rotorblattprofiltiefe und 2 % der lokalen Rotorblattprofiltiefe beträgt, und/oder
wobei beide der Seilabschnitte (401, 402) eine gleiche Dicke aufweisen.

8. Vorrichtung (200) nach einem der vorstehenden Ansprüche,
wobei die Befestigungsanordnung (500) ein starres Element (504) und ein elastisches Element (505) umfasst, wobei insbesondere das starre Element (504) in dem montierten Zustand auf einer von Druckseite und Saugseite angeordnet ist und das elastische Element (505) in dem montierten Zustand auf einer von Druckseite und Saugseite angeordnet ist, auf der nicht das mindestens eine starre Element (504) angeordnet ist,
wobei das elastische Element (505) insbesondere derart dimensioniert ist, dass auf das elastische Element (505) in dem montierten Zustand eine Kraft zwischen 10 N und 200 N, insbesondere zwischen 20 N und 40 N, wirkt.

9. Vorrichtung (200) nach einem der vorstehenden Ansprüche, wobei die Befestigungsanordnung (500) mindestens ein Positionierungselement (507) umfasst, das als lokale Vergrößerung der Befestigungsanordnung (500) ausgestaltet ist, wobei das mindestens eine Positionierungselement (507) ausgestaltet ist eine Verschiebung der Befestigungsanordnung (500) über die Rotorblatthinterkante zu vermeiden.

10. Vorrichtung (200) nach einem der vorstehenden Ansprüche, wobei die Befestigungsanordnung (500) mindestens ein Lastverteilungselement (503) umfasst, insbesondere ein Planenelement, zur radialen Lastverteilung in Rotorblattlängsrichtung im montierten Zustand, wobei das mindestens eine Lastverteilungselement mit mindestens einem der Vielzahl von Befestigungsmitteln (501), insbesondere mit jedem der Vielzahl von Befestigungsmitteln (501), verbindbar ausgestaltet ist.

11. Vorrichtung (200) nach Anspruch 10,
wobei die Befestigungsanordnung (500) eine Vielzahl von Verbindungselementen (506) umfasst und das mindestens eine Lastverteilungselement (503) eine Breite in Rotorblattprofiltiefenrichtung aufweist und mit der Vielzahl von Verbindungselementen (506) verbindbar ausgestaltet ist, wobei jedes der Vielzahl von Verbindungselementen (506) in dem montierten Zustand jeweils mindestens einen Kontaktpunkt (502) an der Rotorblatthinterkante und einen Abstand in Rotorblattlängsrichtung zu weiteren der Vielzahl von Verbindungselementen (506) aufweist, wobei der Abstand mindestens 200 % einer Breite des Lastverteilungselements (503) in Rotorblattprofiltiefenrichtung beträgt, und/oder
wobei die Befestigungsanordnung (500) umfasst:
ein erstes Lastverteilungselement (510), insbesondere ein erstes Planenelement auf der Saugseite,
ein zweites Lastverteilungselement (511), insbesondere ein zweites Planenelement auf der Druckseite, und
eine Vielzahl von Verbindungselementen (506),
wobei jedes der Vielzahl von Verbindungselementen (506) ausgestaltet ist das erste Lastverteilungselement (510) und das zweite Lastverteilungselement (511) zu verbinden, wobei jedes der Vielzahl von Verbindungselementen (506) zwischen dem ersten Lastverteilungselement (510) und dem zweiten Lastverteilungselement (511) mindestens einen Kontaktpunkt (502) an der Rotorblatthinterkante aufweist.

12. Vorrichtung (200) nach Anspruch 11,
wobei das Rotorblatt (108) eine Vielzahl an der Rotorblatthinterkante angeordneter Serrations (130) aufweist, wobei jedes der Vielzahl von Verbindungselementen (506) derart ausgestaltet ist, dass im montierten Zustand der mindestens eine Kontaktpunkt (502) zwischen zwei der Vielzahl von Serrations (130) angeordnet ist, und/oder
wobei mindestens eines der Vielzahl von Verbindungselementen (506) ein erstes Positionierungselement (508) und ein zweites Positionierungselement (509) umfasst, derart, dass im montierten Zustand das erste Positionierungselement (508) auf der Saugseite angeordnet ist und das zweite Positionierungselement (509) auf der Druckseite angeordnet ist, wobei das erste Positionierungselement (508) und das zweite Positionierungselement (509) als lokale Vergrößerungen des mindestens einen Verbindungselements (506) ausgestaltet sind, und das das erste Positionierungselement (508) und das zweite Positionierungselement (509) ausgestaltet sind eine Verschiebung des mindestens einen Verbindungselements (506) über die Rotorblatthinterkante zu vermeiden.

13. Vorrichtung (200) nach einem der vorstehenden Ansprüche, wobei jedes der Vielzahl von Befestigungsmitteln (501) im montierten Zustand individuell lösbar ausgestaltet ist, umfassend mindestens ein Lösungselement (600) ausgestaltet zur individuellen Lösung jedes der Vielzahl von Befestigungsmitteln (501) wobei das Lösungselement (600) derart ausgestaltet ist, dass die individuelle Lösung jedes der Vielzahl von Befestigungsmitteln (501) aus einer Distanz zu der Vielzahl von Befestigungsmitteln (501) durchführbar ist, wobei die Distanz mindestens der Rotorblattlänge entspricht.

14. Vorrichtung (200) nach einem der vorstehenden Ansprüche, umfassend mindestens ein Schutzelement ausgestaltet zur Umschließung wenigstens eines Teils der Befestigungsanordnung (500), wobei das mindestens eine Schutzelement insbesondere als ein oder mehrere Klappen oder ein oder mehrere Laschen ausgestaltet ist und einen Verschluss, vorzugsweise ein oder mehrere Klettbänder oder ein oder mehrere Druckknöpfe, umfasst.

15. Verfahren zur temporären Befestigung einer Vorrichtung (200) zur Vermeidung von induzierten Rotorblattschwingungen an einem Rotorblatt (108) einer Windenergieanlage (100), wobei sich das Rotorblatt (108) von einer Rotorblattwurzel (109) in Rotorblattlängsrichtung mit einer Rotorblattlänge zur Rotorblattspitze und von einer Rotorblattvorderkante mit einer Rotorblattprofiltiefe in Rotorblattprofiltiefenrichtung senkrecht zur Rotorblattlängsrichtung zu einer Rotorblatthinterkante erstreckt und eine Saugseite und eine Druckseite aufweist, wobei die Vorrichtung (200) umfasst
zwei Seilabschnitte (401, 402), die in einem montierten Zustand, in dem die Vorrichtung (200) an dem Rotorblatt (108) montiert ist, als Störkante (400) wirkend ausgestaltet sind,
eine Befestigungsanordnung (500) umfassend eine Vielzahl von Verbindungselementen (506),
wobei
das Rotorblatt (108) eine Vielzahl von an der Rotorblatthinterkante angeordneten Serrations (130) aufweist,
die Störkante (400) in einem Bereich der Rotorblattvorderkante an dem Rotorblatt (108) anbringbar ausgestaltet ist,
die Befestigungsanordnung (500) an der Störkante (400) anbringbar ausgestaltet ist, umfassend die folgenden Schritte:
Anordnen der Störkante (400) an dem Rotorblatt (108);
Anbringen der Befestigungsanordnung (500) an der Störkante (400) auf einer der Saugseite oder der Druckseite;
Führen der Vielzahl von Verbindungselementen (506) von der einen der Saugseite oder der Druckseite auf eine andere der Saugseite oder der Druckseite über die Rotorblatthinterkante derart, dass jedes der Vielzahl von Verbindungselementen (506) zwischen zwei der Vielzahl von Serrations (130) verläuft;
Befestigen der Vorrichtung (200) an dem Rotorblatt (108) durch Anbringen der Befestigungsanordnung (500) auf der anderen der Saugseite oder der Druckseite an der Störkante (400).
